# FASCICULE DE BREVET EUROPEEN

(11) **EP 2 292 366 B1**
(45) Date de publication et mention de la délivrance du brevet: **03.06.2020**
(21) Numéro de dépôt: 10170567.1
(22) Date de dépôt: 23.07.2010
(51) Int. Cl.: B23K 9/29, B23K 10/00, H05H 1/32

(54) **TORCHE PLASMA À TÊTE DÉMONTABLE AVEC BAGUE À FILETAGE TRAPÉZOÏDAL ISOCÈLE**
PLASMABRENNER MIT EINEM DURCH EINE TRAPEZGEWINDE ABNEHMBAREN BRENNERKOPF
PLASMA TORCH WITH A REMOVABLE HEAD SECURED BY MEANS OF A RING HAVING A TRAPEZOIDAL THREAD

(30) Priorité: 04.09.2009 FR 0956046
(43) Date de publication de la demande: 09.03.2011
(73) Titulaire: Lincoln Global, Inc., Santa Fe Springs, CA 90670 (US)
(72) Inventeur: Desclides, Mickaël, 78150 Le Chesnay (FR)
(74) Mandataire: Grosse Schumacher Knauer von Hirschhausen

(56) Documents cités:
- EP-A1- 0 599 709
- DE-A1- 4 234 267
- DE-U1- 29 921 381

## Description

L'invention concerne une torche à plasma à tête démontable dont le montage et le démontage rapide sur l'embase ou corps de torche se fait au moyen d'une bague à filetage trapézoïdal isocèle.

Les torches de coupage plasma à tête démontable comportent deux parties principales pouvant être assemblées ou désassemblées l'une de l'autre, à savoir une embase ou corps de torche qui est habituellement fixé sur une structure, tel un bâti-porteur muni d'une poutre mobile par exemple, et un nez ou tête de torche qui est amovible.

Des exemples de torches de coupage plasma à tête démontable sont notamment connus des documents EP-A-599709, GB-A-2091594, EP-A-801882 et EP-A-941018.

L'embase ou corps de torche est une interface entre le générateur électrique, le boîtier haute fréquence et/ou haute tension nécessaire à l'amorçage de l'arc, le boîtier de régulation des gaz et le système de refroidissement.

De ce fait, les tuyaux et fils électriques issus des différents éléments convergent vers l'embase qui regroupe les différentes entrées et sorties de fluides, à savoir liquide de refroidissement, gaz plasmagène et gaz protecteur, ainsi que les connections électriques pour la cathode et les circuits d'amorçage et pilote.

Le nez ou tête de la torche contient les consommables de la torche, à savoir une électrode, un diffuseur amont de gaz, une tuyère amont, un diffuseur aval de gaz et une tuyère aval, ainsi que les circuits internes de distribution des gaz et du liquide de refroidissement.

Ces différents consommables s'érodent plus ou moins rapidement, lors de l'utilisation de la torche, et il est nécessaire de les remplacer par des consommables neufs après, en général, quelques heures d'utilisation, par exemple après 2 heures ou plus de coupage.

Or, pouvoir séparer la tête de torche du corps de torche, c'est-à-dire de l'embase, est très pratique d'un point de vue de la productivité par rapport aux torches à tête non démontable car cela permet de préparer à l'avance une tête de torche comprenant des consommables neufs et de la raccorder au corps de torche immédiatement après démontage de la tête dont les consommables sont usés. Ceci se fait donc sans perte de temps et donc quasiment sans perte de productivité.

Ensuite, pendant que la tête de torche nouvellement montée sur le corps est utilisée pour réaliser une opération de découpe, l'autre tête de torche qui vient d'être désolidarisée du corps de torche, c'est-à-dire de l'embase, peut être démontée, les consommables usés peuvent en être extraits et remplacés par des consommables neufs. La tête sera donc prête à être remontée lorsque la limite de durée de vie des consommables de l'autre tête sera atteinte.

Le montage/démontage d'une tête de torche sur un corps de torche se fait au moyen d'une bague, en général filetée, qui permet de fixer la tête de torche à l'embase qui comporte un filetage complémentaire, et dont le serrage assure l'étanchéité des raccords des conduits de fluides et le bon contact entre les raccords électriques. Habituellement, cette bague est fabriquée en matériau électriquement isolant.

Or, lors d'une utilisation intensive en milieu industriel, des poussières, notamment métalliques, détériorent progressivement le filetage par abrasion, lors de chaque opération de vissage ou dévissage.

Il s'ensuit qu'au fil du temps, la tête de torche se monte de plus en plus difficilement sur le corps de torche et, par ailleurs, l'étanchéité et le contact entre la tête de la torche et le corps de torche ou embase ne sont plus assurés correctement.

En outre, des problèmes se posent aussi lorsque la bague de serrage servant à connecter la tête de torche à l'embase est réalisée en un matériau différent de celui de l'embase. Ainsi, on a pu remarquer que des grippages se produisent lorsque l'embase est en acier inoxydable et la bague de serrage en cuivre ou laiton.

Enfin, le montage de la tête de torche sur l'embase doit pouvoir être opéré facilement par l'opérateur et avec une grande précision.

Le problème qui se pose est dès lors de pouvoir monter et démonter manuellement la tête de torche à plasma du corps de torche sans rencontrer les problèmes susmentionnés, en particulier en minimisant la détérioration du filetage par abrasion, lors de chaque opération de vissage ou dévissage, de manière à préserver étanchéité et contact entre la tête de la torche et le corps de torche.

La solution de l'invention est un ensemble formé d'une tête de torche de coupage plasma solidarisée à un corps de torche plasma à l'aide d'une bague selon la revendication 1.

Selon le cas, l'ensemble de l'invention peut comprendre l'une ou plusieurs des caractéristiques suivantes :
- la bague de serrage comporte au moins un filetage en cuivre ou laiton.
- le corps de torche porte un filetage formé d'acier inoxydable.
- le filetage comporte entre 2 et 7 filets par 2,54 cm (1 pouce).
- le filetage comporte entre 3 et 6 filets par 2,54 cm (1 pouce), de préférence 4 ou 5 filets par pouce.
- les deux côtés de chaque filet de section trapézoïdale forment entre eux un angle A compris entre 20 et 40°.
- les deux côtés de chaque filet de section trapézoïdale isocèle forment entre eux un angle A compris entre 25 et 35°, de préférence de l'ordre de 29°.
- la distance D entre la surface du filet formant la petite base du trapèze et l'axe de la tête de torche est comprise entre 50 et 70 mm, de préférence de l'ordre de 60,2 mm.
- la bague est formée de laiton recouvert extérieurement d'un revêtement en nickel.

Par ailleurs, l'invention concerne également un procédé de coupage par jet de plasma, dans lequel on met en œuvre une tête de torche selon l'invention.

La présente invention va être expliquée plus en détail en références aux figures annexées parmi lesquelles :
- la figure 1 schématise une torche de coupage plasma à tête démontable vue en position désassemblée sur un corps de torche, et
- la figure 2 illustre le principe d'un filetage selon la présente invention destiné à une torche selon la figure 1.

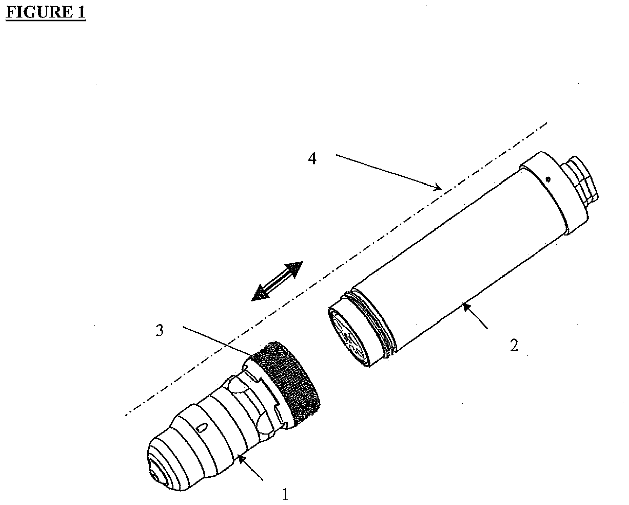

La figure 1 représente une torche de coupage plasma à tête 1 démontable montrée en position désassemblée sur un corps 2 de torche, encore appelé embase. La tête 1 comporte de manière classique à son extrémité aval, une électrode, une tuyère et une coiffe de protection.

La fixation de la tête 1 au corps 2 de torche se fait classiquement par vissage grâce à une bague 3 métallique taraudée, venant coopérer avec un filetage aménagé sur le corps 2 de torche.

La bague 3 est typiquement en laiton, préférentiellement recouvert extérieurement d'une couche de nickel.

La bague 3 est libre et mobile en rotation autour de la paroi périphérique externe de la tête 1 de torche, c'est-à-dire autour de l'axe 4 principal de la torche, et aussi en translation le long de l'axe 4 de la tête de torche 1.

Lors de son utilisation, la torche est soumise à des atmosphères souvent corrosives et/ou poussiéreuses, poussières métallique en particulier, dans les ateliers de soudage ou sur site industriel par exemple. Dans de tels environnements, le pas de vis ou filetage présent sur la tête de torche 1 et/ou sur l'embase 2 peut se gripper et être abrasé lors des montages/démontages successifs de la tête 1, ce qui, à terme, peut conduire à un mauvais montage de la tête 1 de torche sur son embase 2 n'assurant plus une bonne étanchéité des raccords fluide.

Afin d'éviter ce problème, selon la présente invention, on aménage sur la tête de torche 1 et sur le corps de torche 2 des filetages complémentaires de section de filet particulière, à savoir de section de filet trapézoïdale isocèle, et non de forme triangulaire comme classiquement utilisé.

Le filetage porté par la bague 3 est aménagé sur la paroi interne de ladite bague 3, laquelle est formée de laiton. Par ailleurs, le filetage porté par le corps est aménagé sur sa paroi externe qui est formée d'acier inoxydable.

Dit autrement, le filet du filetage de la bague 3 est en laiton, alors que le filet du filetage du corps est en acier inoxydable.

Le fait d'utiliser des filetages de forme trapézoïdale isocèle, alors que les filetages de la bague et du corps sont réalisés dans des matériaux différents permet d'éviter ou minimiser les problèmes de grippage.

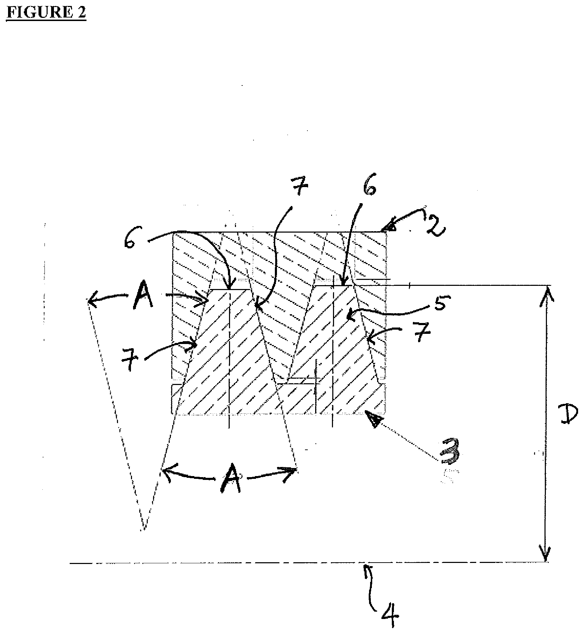

Un tel filetage de section trapézoïdale isocèle selon l'invention est montré sur la figure 2. Ce type de filetage est plus robuste que les filetages standards de section triangulaires. L'épaisseur des filets est telle que le filetage est plus résistant à l'abrasion et la corrosion.

Par ailleurs, un tel filetage permet un léger jeu radial par rapport à l'axe de la torche se qui facilite l'insertion des raccords fluides et électriques, sur la partie la plus amont de la tête de torche, dans les logements correspondants situés sur la partie la plus aval de l'embase.

De plus, ce type de filetage est un système irréversible : une fois vissé jusqu'au point de serrage il ne se dévissera pas sous le simple effet de vibrations, comme celles existant sur une table de découpe plasma automatique, ou encore sous l'effet du relâchement de contraintes mécaniques et/ou thermiques. Seule l'application d'un couple sur la bague, par un opérateur ou un système de montage automatique, permet le dévissage.

Enfin, cette géométrie trapézoïdale isocèle est mieux adaptée pour la transformation d'un mouvement de rotation, à savoir vissage dévissage de la bague 3 sur l'embase 2, en mouvement de translation, lors de l'insertion ou de l'extraction de la tête 1 de la torche de l'embase 2.

La figure 2 détaille un filetage de la bague 3 conforme à la présente invention. Comme on peut le voir, le filet dudit filetage 5 est de section trapézoïdale isocèle, c'est-à-dire que la section de chaque filet comporte deux côtés latéraux 7 formant entre eux un angle A compris entre 20 et 40°, de préférence entre 25 et 35°, de préférence encore de l'ordre de 29°, une grande base et une petite base, la petite base étant formée par la surface supérieure 6 de chaque filet. Le trapèze est isocèle, donc comporte deux côtés latéraux 7 égaux.

Selon l'invention, le filetage 5 de la bague 3 comporte entre 2 et 7 filets par pouce (soit 2,54 cm) considéré dans le sens de la longueur, c'est-à-dire selon l'axe 4 de la tête 1, avantageusement entre 3 et 6 filets par pouce.

Par ailleurs, la distance D entre la surface 6 du filet 5 formant la petite base du trapèze et l'axe 4 de la tête de torche est comprise entre 50 et 70 mm, de préférence de l'ordre de 60,2 mm.

La bague 3 est en métal ou en alliage métallique, en particulier en laiton recouvert d'un revêtement en nickel permettant de limiter l'effet de la corrosion.

A titre indicatif, les dimensions du filetage 5 de la bague 3 correspondent à un filetage trapézoïdal isocèle de type ACME (angle total de 29°), avec un diamètre de 60,2 mm et 4 filetages/pouce (1 pouce = 25.4 mm).

Dans ce cas, le filetage correspondant sur le corps 2 est de type ACME avec un diamètre de 60 mm et 6 filetages/pouce.

Choisir un filetage complémentaire pour le corps 2 de torche est à la portée d'un homme du métier du métier connaissant le filetage de la tête 1.

D'une façon générale, un filetage à section ou profil trapézoïdal isocèle selon l'invention permet également d'obtenir un meilleur glissement des filets l'un sur l'autre, à la fois au serrage et au desserrage, tout en conservant un bon effet de coincement.

De plus, la forme particulière du filetage selon l'invention est, d'une part, aisée à fabriquer et, d'autre part, permet une grande précision de couplage et de centrage grâce au guidage efficace que procurent les flancs des filets.

## Revendications

1. Ensemble formé d'une tête (1) de torche de coupage plasma solidarisée à un corps (2) de torche à plasma au moyen d'une bague (3) de fixation, ladite tête (1) de torche de coupage plasma comprenant une extrémité amont et une extrémité aval, et la bague (3) de fixation mobile en rotation et en translation au moins au niveau de l'extrémité amont de ladite tête (1) de torche, ladite bague (3) comportant un filetage (5) aménagé sur sa paroi interne servant à solidariser ladite tête (1) de torche au corps (2) de torche, **caractérisée en ce que** le filet dudit filetage (5) est de section trapézoïdale isocèle, ledit corps (2) de torche comprenant un filetage de section trapézoïdale isocèle complémentaire du filetage de ladite tête (1) de torche, et **caractérisée par** un jeu radial par rapport à l'axe de la torche se qui facilite l'insertion des raccords fluides et électriques, sur la partie la plus amont de la tête (1) de torche, dans des logements correspondants situés sur la partie la plus aval du corps (2) de torche.

2. Ensemble selon la revendication 1, **caractérisée en ce que** le filetage (5) comporte entre 2 et 7 filets par 2,54 cm.

3. Ensemble selon l'une des revendications précédentes, **caractérisée en ce que** le filetage (5) comporte entre 3 et 6 filets par 2,54 cm.

4. Ensemble selon l'une des revendications précédentes, **caractérisée en ce que** les deux côtés (7) de chaque filet (5) de section trapézoïdale forment entre eux un angle (A) compris entre 20 et 40°.

5. Ensemble selon l'une des revendications précédentes, **caractérisée en ce que** les deux côtés (7) de chaque filet (5) de section trapézoïdale forment entre eux un angle (A) compris entre 25 et 35°, de préférence de l'ordre de 29°.

6. Ensemble selon l'une des revendications précédentes, **caractérisée en ce que** la distance (D) entre la surface (6) du filet (5) formant la petite base du trapèze et l'axe (4) de la tête de torche est comprise entre 50 et 70 mm, de préférence de l'ordre de 60,2 mm.

7. Ensemble selon l'une des revendications précédentes, **caractérisée en ce que** le filetage (5) est aménagé dans la paroi interne en cuivre ou laiton de la bague (3).

8. Ensemble selon l'une des revendications précédentes, **caractérisée en ce que** la bague (3) est en laiton au moins partiellement recouvert d'un revêtement en nickel.

9. Ensemble selon l'une des revendications précédentes, **caractérisé en ce que** le corps de torche (2) comprend un filetage en acier inoxydable.

10. Ensemble selon l'une des revendications précédentes, **caractérisé en ce que** la bague (3) de fixation comprend un filetage en laiton.

11. Procédé de coupage par jet de plasma, dans lequel on met en oeuvre un ensemble tête (1)/corps (2) de torche à plasma selon l'une des revendications 1 à 10.

## Patentansprüche

1. Anordnung, die aus einem Kopf (1) eines Plasmaschneidbrenners gebildet wird, der mittels eines Rings (3) zur Befestigung mit einem Körper (2) des Plasmabrenners fest verbunden ist, wobei der Kopf (1) des Plasmaschneidbrenners ein stromaufwärtiges Ende und ein stromabwärtiges Ende aufweist und der Ring (3) zur Befestigung zumindest am stromaufwärtigen Ende des Kopfes (1) des Brenners in Rotation und in Translation beweglich ist, wobei der Ring (3) ein an seiner Innenwand vorgesehenes Gewinde (5) aufweist, das dazu dient, den Kopf (1) des Brenners mit dem Körper (2) des Brenners fest zu verbinden, **dadurch gekennzeichnet, dass** der Gewindegang des Gewindes (5) einen gleichschenkligen trapezförmigen Querschnitt aufweist, wobei der Körper (2) des Brenners ein Gewinde mit gleichschenkligem trapezförmigem Querschnitt komplementär zum Gewinde des Kopfes (1) des Brenners aufweist, und **gekennzeichnet durch** ein radiales Spiel in Bezug auf die Achse des Brenners, wodurch das Einführen von fluidischen und elektrischen Verbindungen am stromaufwärts gelegenen Abschnitt des Kopfes (1) des Brenners in entsprechende Gehäuse erleichtert wird, die am stromabwärts gelegenen Abschnitt des Körpers (2) des Brenners angeordnet sind.

2. Anordnung nach Anspruch 1, **dadurch gekennzeichnet, dass** das Gewinde (5) zwischen 2 und 7 Gewindegänge pro 2,54 cm aufweist.

3. Anordnung nach einem der vorhergehenden Ansprüche, **dadurch gekennzeichnet, dass** das Gewinde (5) zwischen 3 und 6 Gewindegänge pro 2,54 cm aufweist.

4. Anordnung nach einem der vorhergehenden Ansprüche, **dadurch gekennzeichnet, dass** die beiden Seiten (7) jedes Gewindegangs (5) mit trapezförmigem Querschnitt untereinander einen Winkel (A) zwischen 20 und 40° bilden.

5. Anordnung nach einem der vorhergehenden Ansprüche, **dadurch gekennzeichnet, dass** die beiden Seiten (7) jedes Gewindegangs (5) mit trapezförmigem Querschnitt untereinander einen Winkel (A) zwischen 25 und 35° bilden, vorzugsweise in der Größenordnung von 29°.

6. Anordnung nach einem der vorhergehenden Ansprüche, **dadurch gekennzeichnet, dass** der Abstand (D) zwischen der Oberfläche (6) des Gewindegangs (5), die die kleine Basis des Trapezes bildet, und der Achse (4) des Brennerkopfes zwischen 50 und 70 mm liegt, vorzugsweise in der Größenordnung von 60,2 mm.

7. Anordnung nach einem der vorhergehenden Ansprüche, **dadurch gekennzeichnet, dass** das Gewinde (5) in der Innenwand aus Kupfer oder Messing des Rings (3) angeordnet ist.

8. Anordnung nach einem der vorhergehenden Ansprüche, **dadurch gekennzeichnet, dass** der Ring (3) aus Messing besteht, das zumindest teilweise mit einer Nickelbeschichtung versehen ist.

9. Anordnung nach einem der vorhergehenden Ansprüche, **dadurch gekennzeichnet, dass** der Brennerkörper (2) ein Gewinde aus rostfreiem Stahl umfasst.

10. Anordnung nach einem der vorhergehenden Ansprüche, **dadurch gekennzeichnet, dass** der Ring (3) zur Befestigung ein Messinggewinde umfasst.

11. Plasmastrahl-Schneidverfahren, bei dem eine Anordnung aus Kopf (1)/Körper (2) eines Plasmabrenners nach einem der Ansprüche 1 bis 10 verwendet wird.

## Claims

1. An assembly formed of a plasma cutting torch head (1) connected to a plasma torch body (2) by means of a securing ring (3), said plasma cutting torch head (1) comprising an upstream end and a downstream end, and the fixing ring (3) being movable in rotation and in translation at least at the upstream end of said torch head (1), said ring (3) comprising a thread (5) formed on its inner wall and being used to connect said torch head (1) to the torch body (2), **characterised in that** the turns of said thread (5) have a trapezoidal section, said torch body (2) comprising a thread of trapezoidal section complementary to the thread of said torch head (1), and **characterised by** a radial play relative to the axis of the torch, which play facilitates the insertion of fluid and electrical connections, on the furthest downstream portion of the torch head (1), into corresponding recesses situated on the further upstream portion of the torch body (2).

2. The assembly according to claim 1, **characterised in that** the thread (5) has been 2 and 7 turns every 2.54 cm.

3. The assembly according to either one of the preceding claims, **characterised in that** the thread (5) has between 3 and 6 turns every 2.54 cm.

4. The assembly according to any one of the preceding claims, **characterised in that** the two sides (7) of each turn (5) of trapezoidal section form therebetween an angle (A) between 20 and 40°.

5. The assembly according to any one of the preceding claims, **characterised in that** the two sides (7) of each turn (5) of trapezoidal section form therebetween an angle (A) between 25 and 35°, preferably in the order of 29°.

6. The assembly according to any one of the preceding claims, **characterised in that** the distance (D) between the surface (6) of the turn (5) forming the short base of the trapezoid and the axis (4) of the torch head is between 50 and 70 mm, preferably approximately 60.2 mm.

7. The assembly according to any one of the preceding claims, **characterised in that** the thread (5) is formed in the inner wall, made of copper or brass, of the ring (3).

8. The assembly according to any one of the preceding claims, **characterised in that** the ring (3) is made of brass at least partially covered by a nickel coating.

9. The assembly according to any one of the preceding claims, **characterised in that** the torch body (2) comprises a thread made of stainless steel.

10. The assembly according to any one of the preceding claims, **characterised in that** the securing ring (3) has a thread made of brass.

11. A method for plasma jet cutting, in which a plasma torch head (1)/body (2) assembly according to any one of claims 1 to 10 is used.
